# EUROPÄISCHE PATENTSCHRIFT

(11) **EP 0 734 300 B1**
(45) Veröffentlichungstag und Bekanntmachung des Hinweises auf die Patenterteilung: **12.05.1999**
(21) Anmeldenummer: 95904473.6
(22) Anmeldetag: 15.12.1994
(51) Int. Cl.: B23B 51/04

(54) **FÜHRUNGSELEMENT FÜR EIN ZERSPANUNGSWERKZEUG**
GUIDE ELEMENT FOR A CUTTING TOOL
GUIDE POUR OUTIL TRAVAILLANT PAR ENLEVEMENT DE COPEAUX

(30) Priorität: 16.12.1993 DE 9319354 U
(43) Veröffentlichungstag der Anmeldung: 02.10.1996
(73) Patentinhaber: KENNAMETAL HERTEL AG Werkzeuge + Hartstoffe, 90766 Fürth (DE)
(72) Erfinder: KRENZER, Ulrich, D-90513 Zirndorf (DE); HITZ, Wolfgang, D-92353 Postbauer-Heng (DE)
(74) Vertreter: Tergau, Enno, Dipl.-Ing.
(86) Internationale Anmeldenummer: EP9404155
(87) Internationale Veröffentlichungsnummer: WO9516535

(56) Entgegenhaltungen:
- DE-A- 2 416 157
- DE-A- 4 214 528
- FR-A- 2 072 230
- US-A- 2 320 333
- US-A- 3 816 018

## Beschreibung

Die Erfindung betrifft ein Führungselement für ein Zerspanungswerkzeug gemäß dem Oberbegriff des Patentanspruchs 1 und wie z.B. aus DE-A-42 14 528 bekannt. Bei Zerspanungswerkzeugen besteht insbesondere beim Schneiden von Bohrungen mit großem Durchmesser das Problem, daß der Schnitt nicht genau zentrisch verläuft und deshalb auch nicht immer eine exakte zylinderförmige Bohrung erreicht werden kann. Vielmehr hat die Bohrung einen unregelmäßigen, polygonförmigen Querschnitt. Dieser "unrunde" Querschnitt der Bohrung überträgt sich bei der weiteren Bearbeitung wieder auf das Werkzeug zurück. Das Werkzeug läuft deshalb nicht "rund", sondern wird durch die unregelmäßige Querschnittsform des Bohrlochs immer wieder aus dem Rundlauf herausgeschwungen und strebt einen entsprechend unregelmäßigen, polygonförmigen Lauf an. Außerdem können bei langen und schlanken Zerspanungswerkzeugen die auftretenden Schnittkräfte durch die Eigensteifigkeit des Werkzeugs nicht in zufriedenstellender Weise aufgenommen werden. Dadurch können kritsche, elastische Deformationen am Werkzeug entstehen

Zur Abmilderung des vorbeschriebenen unregelmäßigen Laufs des Werkzeugs und zur Verhinderung kritischer, elastischer Deformationen am Werkzeug ist es bekannt, Führungselemente an den Außenseiten des Werkzeugs anzubringen. Diese Führungselemente stützen das Werkzeug in radialer Richtung an den bereits von der jeweils vorauseilenden Schneide erzeugten Bohrungsinnenwänden ab. Die Abstützung bewirkt einerseits eine zusätzliche Stabilisierung des Werkzeugs gegen Deformationen und mildert den unerwünscht unregelmäßigen Lauf des Werkzeugs wirksam ab.

Zur Verbesserung des Rundlaufverhaltens des Werkzeugs ist es beispielsweise aus der **DE-A-42 14 528** bekannt, in der Mitte der Hauptschneide einen sogenannten Pilotbohrer oder Zentrierbohrer vorzusehen. Dieser Pilot- oder Zentrierbohrer führt das Werkzeug zentrisch in der Bohrung. Es besteht jedoch das Problem, daß beim Herausführen des Werkzeugs aus der Bohrung der Pilot- oder Zentrierbohrer außer Eingriff mit der Pilot- oder Zentrierbohrung gerät, so daß das Werkzeug beim Herausführen aus der Bohrung wiederum dazu neigt, unregelmäßig "unrund" zu laufen. Auch bei diesem bekannten Werkzeug sind deshalb zudem die vorerwähnten, radial an den Umfangsflächen des Werkzeugs angeordneten Führungselemente vorhanden. Nachteilig bei diesen bekannten Führungselementen ist deren komplizierte Montage. Bereits das Einbringen der Führungselemente in das Werkzeug bereitet große montagetechnische Schwierigkeiten. Zudem sind die Werkzeuge nur mit einem sehr hohen Aufwand ein- und nachstellbar.

Bei der Schlicht-Zerspanung ist die Oberfläche und die Formgenauigkeit in der Regel sehr gut. Die Führungselemente werden deshalb nicht sehr stark belastet. Bei der Schrupp-Zerspanung dagegen ist sowohl die Bohrungsoberfläche als auch die Formungenauigkeit der Bohrung für die Führungselemente häufig sehr ungünstig. Probleme treten insbesondere beim Bohren mit Bohrwerkzeugen auf, welche mit Wendeschneidplatten bestückt sind. Durch ein infolge der Zerspanung anfallendes, großes Spänevolumen wird die Oberfläche der Bohrungsinnenwand stark verkratzt. Die Oberflächengüte der Bohrung wird also stark herabgemindert. Die auf diese Weise entstehenden Oberflächenfehler führen zu einem unruhigen Lauf des Führungselements auf der Bohrungsinnenwand, so daß wiederum unerwünschte Eigenschwingungen im Werkzeug aufgebaut werden. Zudem kann das große Spänevolumen dazu führen, daß die Späne das Werkzeug aus seiner Rotationslängsrichtung abdrängen und so ein unrundes Laufen des Werkzeugs verursachen. Die Bohrung erhält durch beide Effekte zwangsläufig Form- bzw. Konturfehler.

Die der jeweiligen Schneide nacheilenden Führungselemente müssen deshalb so robust und schlagfest sein, daß sie den durch die Formfehler hervorgerufenen mechanischen Belastungen widerstehen. Um einen Abrieb der Führungselemente an den infolge des Zerkratzens rauhen Bohrungswänden zu verhindern, müssen die Führungselemente zudem hart und verschleißfest sein. Schließlich ist es vorteilhaft, wenn die Führungselemente die Maß- und Formtoleranzfehler kompensieren können, die infolge des Wechsels der Wendeschneidplatten stets auftreten.

Schließlich sind lange Innenbearbeitungswerkzeuge häufig sehr schwingungsempfindlich. Die Führungselemente dürfen deshalb die von der Schneide ausgehenden Schwingungen nicht auf das Werkstück übertragen. Vielmehr sollen die Führungselemente auch die von der Schneide ausgehenden Schwingungen möglichst kompensieren, zumindest jedoch abdämpfen.

Ein weiteres Problem besteht schließlich in dem sehr geringen Einbauraum, der für die Führungselemente zur Verfügung steht. Die Handhabbarkeit der Führungselemente wird durch diesen kleinen Einbauraum sehr erschwert. In der Regel sind die Führungselemente deshalb nur mit sehr kleinen Spezialwerkzeugen montierbar. Diese Spezialwerkzeuge haben den Nachteil, daß auf den kleinen Körper des Führungselements überhöhte Flächenpressungen ausgeübt werden. Der Körper des Führungselements wird infolgedessen häufig bereits bei der Montage beschädigt, was die Lebensdauer des Führungselements erheblich verkürzt.

Ausgehend von diesen Nachteilen liegt der Erfindung die Aufgabe zugrunde, ein Führungselement hinsichtlich seiner Gebrauchseigenschaften zu verbessern.

Die Aufgabe ist durch die Merkmalskombination des Patentanspruchs 1 gelöst. Der Werkzeugschaft des Zerspanungswerkzeugs weist hierzu eine in der Regel radial verlaufende Aufnahmebohrung mit einem Innengewinde auf. In das Innengewinde ist ein mit einem Außengewinde versehener Gewindebolzen einschraubbar. Das Innengewinde ist hierbei so ausgestaltet, daß der Gewindebolzen in Einschraubrichtung federnd gelagert ist. Besonders eignen sich Spitzgewinde als Innengewinde des Gewindeträgers. Derartige Spitzgewinde sind handelsüblich, so daß auch die zugehörigen Gewindebolzen als Normware erhältlich sind. Auf dem aus der Aufnahmebohrung hinausragenden Freiende des Gewindebolzens ist schließlich ein Führungskopf fixiert. Dieser Führungskopf ist nach Art einer Führungsleiste wirksam.

Infolge der Einschraubbarkeit des Führungselements ist das Führungselement leicht montierbar und im montierten Zustand auch leicht ein- und nachstellbar. Das Innengewinde ist zur federnden Lagerung des Gewindebolzens so ausgestaltet, daß einerseits eine Selbsthemmung des Gewindebolzens im Gewinde gewährleistet ist und andererseits beim Einfedern des Gewindebolzens in Radialrichtung des Werkzeugs ausgeschlossen ist, daß der Gewindebolzen durch die Gewindegänge des Innengewindes hindurchrutscht.

Die Funktionsweise des Führungselements besteht darin, daß der Gewindebolzen mit dem daran befestigten Führungskopf als Führungskörper wirksam ist. Der Führungskopf liegt während der zerspanenden Bearbeitung an der Bohrungsinnenwand flächig an. Wird infolge einer Unregelmäßigkeit auf der Bohrungsinnenwandoberfläche oder in der Bohrungskontur eine Kraft auf den Führungskörper ausgeübt, kann der auf seine Solltiefe eingeschraubte Führungskörper weiter elastisch in Radialrichtung in die Aufnahmebohrung eindringen. Ist die Unregelmäßigkeit überwunden, wird also keine Kraft mehr auf den Führungskörper ausgeübt, federt er einfach wieder in seine Ausgangsstellung zurück. Der Führungskörper gleitet also um den eingetauchten Betrag wiederum aus dem Gewinde heraus.

Die Patentansprüche 2 bis 7 betreffen eine erste Ausführungsform des Innengewindes. Nach Patentanspruch 2 ist das Gewinde als in die Aufnahmebohrung einsetzbarer Gewindeträger ausgebildet. Der Gewindeträger ist längsgeschlitzt und durch das Einschrauben des Gewindebolzens aufspreizbar. Der Gewindeträger liegt vorzugsweise preßpassungsartig mit seinen Anlageflächen auf seiner Gewindeträgeraußenwand an der Innenwand der Aufnahmebohrung an. Infolge der durch den Gewindebolzen ausgeübten Aufspreizkraft ist der Gewindeträger zusätzlich gegen die Bohrungsinnenwand verspannt. Wird auf den aus Führungskopf und Gewindebolzen bestehenden Führungskörper eine in Radialrichtung des Werkzeugs bzw. in Einschraubrichtung des Führungskörpers gerichtete Kraft ausgeübt, wird der Gewindeträger um einen vordefinierten Betrag aufgespreizt, so daß der Führungskörper in Einschraubrichtung tiefer in den Gewindeträger und damit in die Aufnahmebohrung eintauchen kann. Entfällt die ausgeübte Kraft, kontrahiert der Gewindeträger sich infolge seiner federnden Ausbildung selbsttätig und läßt den Führungskörper um den eingetauchten Betrag wieder gegen die Einschraubrichtung radial zum Werkzeug hinausgleiten.

Nach Patentanspruch 3 sind in den Gewindeträger zwei einander gegenüberliegende Längsschlitze eingebracht. Diese Längsschlitze teilen den Gewindeträger in zwei gegeneinander ausfederbare Gewindeschenkel. Diese Anordnung der Längsschlitze bewirkt eine besonders vorteilhafte Federwirkung und dadurch eine gut gelenkte elastische Verformung des Gewindeträgers. Durch diese Anordnung lassen sich sowohl Form- und Maßtoleranzfehler der Bohrung ausgleichen als auch die von der Schneide erzeugten Schwingungen wirksam reduzieren. Durch Patentanspruch 4 wird deutlich, daß auch eine beliebige Vielzahl von Längsschlitzen in den Gewindeträger eingebracht sein kann.

Patentanspruch 5 betrifft die zusätzliche Nutzung der Vorspannkraft des Gewindebolzens im Gewindeträger zur weiteren kraftschlüssigen Fixierung des Gewindeträgers in der Aufnahmebohrung. Patentanspruch 6 verdeutlicht, daß die Federkonstante des nach Patentanspruch 5 vorgespannten Gewindeträgers so gewählt sein muß, daß der Gewindeträger um ein weiteres Maß als das vorgespannte Maß auseinanderfederbar sein muß.

Durch die in Patentanspruch 7 vorgeschlagene Einbringung von schwingungsdämpfendem Material in den Hohlraum zwischen Gewindeträger und Aufnahmebohrung kann eine zusätzliche Dämpfungswirkung erreicht werden. Außerdem läßt sich anhand der Materialkennwerte der Dämpfungsmasse die Dämpfungsmasse so auswählen, daß die Federkonstante des Gewindeträgers zusätzlich beeinflußbar und damit einstellbar ist. Eine weitere Einstellmöglichkeit der Federkonstanten des Gewindeträgers besteht in der Variation des Fülldrucks, mit welchem das schwingungsdämpfende Material im Hohlraum einliegt.

Die Patentansprüche 8 bis 11 beinhalten eine weitere, unabhängige und zur vorstehend geschilderten Ausführungsform des Innengewindes alternative Ausführungsform. Bei dieser zweiten Ausführungsform wird in die Aufnahmebohrung ein spiralfederartiger, wendelförmiger Drahteinsatz eingesetzt. Die einzelnen Wendelgänge des Drahteinsatzes bilden hierbei die Gewindegänge des Innengewindes. Diese Drahteinsätze haben den großen Vorteil, daß sie handelsüblich als Normware bezogen werden können, was die Werkzeugkosten einerseits senkt und andererseits die Beschaffung der Drahteinsätze erleichtert. Die Drahteinsätze sind beispielsweise unter dem Produktnamen "HeliCoil®" bekannt. Es handelt sich hierbei um wendelförmig gedrehte Drähte. Die einzelnen Wendeln bilden im eingelegten Zustand des Drahteinsatzes jeweils einen Gewindegang zwischen sich. Üblicherweise werden die "HeliCoil®"-Einsätze im Fahrzeugbau eingesetzt, wenn beispielsweise ein ausgeschlagenes Gewinde zu ersetzen ist. Hierfür wird einfach der Drahteinsatz in die Bohrung eingesetzt, um das ausgeschlagene Gewinde zu substituieren.

Patentanspruch 10 betrifft eine besondere Ausführungsform des eingangs geschilderten Drahteinsatzes. Dieser Drahteinsatz enthält einen Wendelgang oder mehrere Wendelgänge, deren Querschnittsform nicht rund sondern polygonförmig ist. Die so gestalteten, polygonförmigen Wendelgänge haben mehrere Polygonkanten. Die Bereiche der polygonförmigen Wendelgänge zwischen den Polygonkanten sind als ebene Flächen mit gerader Querschnittsform ausgestaltet. Diese geraden Wendelbereiche zwischen den Polygonkanten wirken nach Art von radialen Blattfedern. Sobald deshalb der Gewindebolzen in Einschraubrichtung radial zum Werkzeug mit einer Kraft beaufschlagt wird, drückt der Geweindebolzen gegen die geraden Bereiche des Polygons, wodurch die Federbereiche des Polygons blattfederartig nach außen federn. Mit den polygonförmigen Wendelgängen läßt sich dieselbe Federwirkung erreichen, wie sie die geschlitzten Ausführungsformen mit Gewindeträger aufweisen. Die Anbringung mehrerer polygonförmiger Wendelgänge hat zudem den Vorteil, daß ein Durchrutschen des Gewindebolzens in Einschraubrichtung wirksam verhindert ist. Die Anbringung eines wendelförmigen Innenprofils auf der Innenwand der Aufnahmebohrung begünstigt zusätzlich den Halt des Drahteinsatzes in der Aufnahmebohrung und verbessert so mittelbar den Sitz des Führungselements im Werkzeug.

Die Patentansprüche 12 bis 14 beinhalten eine für sich selbst erfinderische und von der übrigen Gestaltung des Führungselements unabhängige Gestaltung des Führungskopfs. Nach Patentanspruch 12 ist ein handelsüblicher Gewindebolzen verwendbar. Dieser Gewindebolzen ist vorzugsweise mit einem Spitzgewinde als Außengewinde versehen. Ferner ist in das eine Freiende des Gewindebolzens vorzugsweise ein Innensechskant eingeformt. Dieser im handelsüblichen Gewindebolzen ohnehin eingeformte Innensechskant wird nach Patentanspruch 12 zur Fixierung des Führungskopfs genutzt. Der Führungskopf ist hierfür etwa pilzförmig ausgestaltet. Der vom Pilzhut abstehende Pilzstengel bildet hierbei einen ebenfalls sechskantförmigen Montageschaft. Der am Führungskopf angeformte Montageschaft ist also ein Außensechskant. Dieser Außensechskant ist passungsgenau an den Innensechskant des Gewindebolzens angepaßt. Der als Außensechskant ausgebildete Montageschaft ist so einfach in den Innensechskant am Freiende des Gewindebolzens passungsgenau einpaßbar. Eine dauerhafte Verbindung zwischen Innensechskant und Außensechskant kann durch Kleben, Löten oder Pressen oder jede andere stoffschlüssige Verbindung erreicht werden. Ebenso eignet sich für diese Verbindung jede andere nut- federartige Kombination einer Bohrung im Freiende des Gewindebolzenz mit einem Montageschaft am Führungskopf mit komplementär zur Bohrung ausgebildeten Gewindeschaft. Es sind also auch Kegelbohrung-Kegelschaft-, Zylinderbohrung- Zylinderschaft- und Mehrkantbohrung-Mehrkantschaftkombinationen möglich.

Die zweiteilige Gestaltung von Geweindebolzen und Führungskopf hat den Vorteil, daß der Führungskopf - wie in Patentanspruch 13 vorgeschlagen - aus einem Hartstoff, bevorzugt Hartmetall, gefertigt werden kann, während als Gewindebolzen ein einfacher, aus Stahl gefertigter, handelsüblicher Gewindebolzen verwendet werden kann. Auch diese Maßnahme dient wiederum zur Senkung der Fertigungskosten.

Die Patentansprüche 13 und 14 lehren schließlich eine Verbesserung der Montageeigenschaften des aus Führungskopf und Gewindebolzen bestehenden Führungskörpers. Der Führungskopf ist danach komplementär zu einem Montagewerkzeug ausgebildet. Er kann beispielsweise als einfache Montagescheibe ausgebildet sein, welche an einen speziellen Montageschlüssel angepaßt ist. Hierfür kann der Führungskopf beispielsweise Abflachungen an seinen Seiten aufweisen. Auch ist es denkbar, in den Führungskopf, bevorzugt in die nicht als Führungsfläche wirksamen Flächen Löcher einzubringen, in welche ein Lochschlüssel einführbar ist. Mit dem Lochschlüssel ist wiederum der Führungskopf montierbar. Eine besonders einfache und kostengünstige und deshalb bevorzugte Ausführungsform lehrt Patentanspruch 14. Hierbei ist der Führungskopf nach Art einer Hutmutter ausgebildet. Die konvex gewölbte Hutfläche des hutmutterkopfartigen Führungskopfs bildet hierbei die eigentliche Führungsfläche, während der Außensechskant als Ansatzfläche für einen handelsüblichen Ring- oder oder Gabel-Schraubenschlüssel dient. Mit dem handelsüblichen, selbst in Heimwerkermärkten erhältlichen Maul- oder Ringschlüssel kann der Gewindebolzen über den Führungskopfaußensechskant (= Montagesechskant) am Werkzeug montiert werden. Es ist auf diese Weise sehr einfach, den Gewindebolzen auf eine vordefinierte Solltiefe in die Aufnähmebohrung hineinzudrehen. Außerdem ist das Ein- und Nachstellen des Gewindebolzens mittels eines Schraubenschlüssels über den Führungskopf einfach realisierbar. Die Verwendung eines Ringschlüssels zur Verstellung des Gewindebolzens hat zudem den Vorteil, daß im Gegensatz zu den nach dem Stand der Technik bekannten Montagewerkzeugen keine überhöhte Flächenpressung auf den Führungskopf ausgewirkt wird. Der Führungskopf gelangt also unbeschädigt zum Einsatz, was die Ausnutzung der gesamten Materiallebensdauer des Führungskopfs für den Betrieb am Werkzeug ermöglicht.

Patentanspruch 15 betrifft schließlich die bevorzugte Kombination des erfindungsmäßigen Führungselementes jeweils mit Bohrwerkzeugen, Senkwerkzeugen oder Reibwerkzeugen.

Anhand der Zeichnungsfiguren sind die verschiedenen Ausführungsformen der Erfindung näher erläutert. Es zeigen:
- Fig. 1: eine Seitenansicht eines Bohrwerkzeugs,
- Fig. 2: den aus Führungskopf und Gewindebolzen bestehenden Führungskörper,
- Fig. 3: einen Gewindeträger nach der Erfindung,
- Fig. 4: den in der Aufnahmebohrung montierten Gewindeträger nach Fig. 3 mit eingeschraubtem Führungskörper nach Fig. 2 ohne Krafteinleitung,
- Fig. 5: den in der Aufnahmebohrung montierten Gewindeträger nach Fig. 3 mit eingeschraubtem Führungskörper nach Fig. 2 mit Krafteinleitung,
- Fig. 6: eine Darstellung der Aufnahmebohrung mit einliegendem Drahtkörper und eingeschraubtem Führungskörper ohne Krafteinleitung,
- Fig. 7: eine Darstellung der Aufnahmebohrung mit einliegendem Drahtkörper und eingeschraubtem Führungskörper mit Krafteinleitung,
- Fig. 8: einen polygonförmigen Wendelgang des in Fig. 6 und Fig. 7 dargestellten Drahteinsatzes.

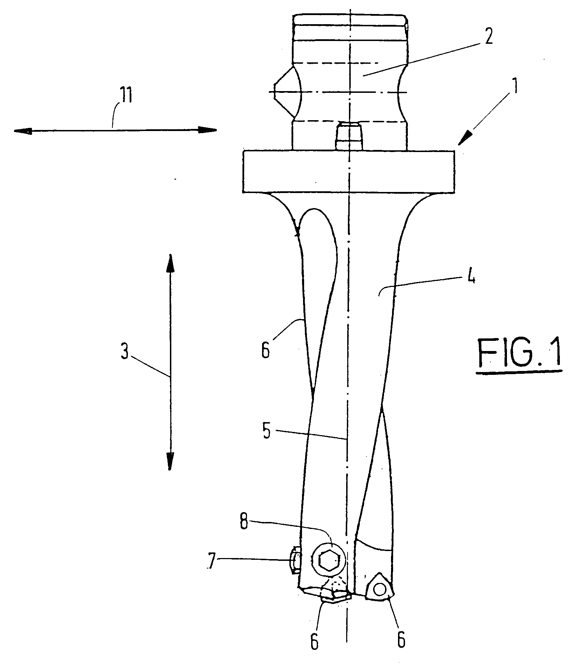

Das in Fig. 1 dargestellte Bohrwerkzeug 1 ist mit seiner Werkzeugaufnahme 2 in der in den Zeichnungen nicht dargestellten Werkzeugmaschine lösbar fixiert. In Längsrichtung 3 schließt sich an die Werkzeugaufnahme 2 am Bohrwerkzeug 1 der Schaft 4 an. Die Mittellängsachse 5 des Schaftes 4 ist also kongruent mit der Längsrichtung 3 in Fig. 1. An dem in Längsrichtung 3 der Werkzeugaufnahme 2 abgewandten Freiende des Bohrwerkzeugs 1 sind schließlich die Wendeschneidplatten 6 lösbar fixiert. Die Wendeschneidplatten 6 bilden zugleich die Hauptschneiden des Bohrwerkzeugs 1.

In Längsrichtung 3 oberhalb der Wendeschneidplatten 6 sind in den Schaft die Führungselemente 7 eingebracht. Die Führungselemente 7 bestehen aus dem Führungskörper 8 und dem entweder als Gewindeträger 9 oder als Drahteinsatz 10 ausgebildeten Innengewinde. Die Führungselemente sind im Schaft 4 des Bohrwerkzeugs 1 in Radialrichtung angeordnet. Die Radialrichtung verläuft senkrecht zur Mittellängsachse 5 des Schafts 4, also in der zur Längsrichtung 3 ebenfalls senkrecht verlaufenden Querrichtung 11.

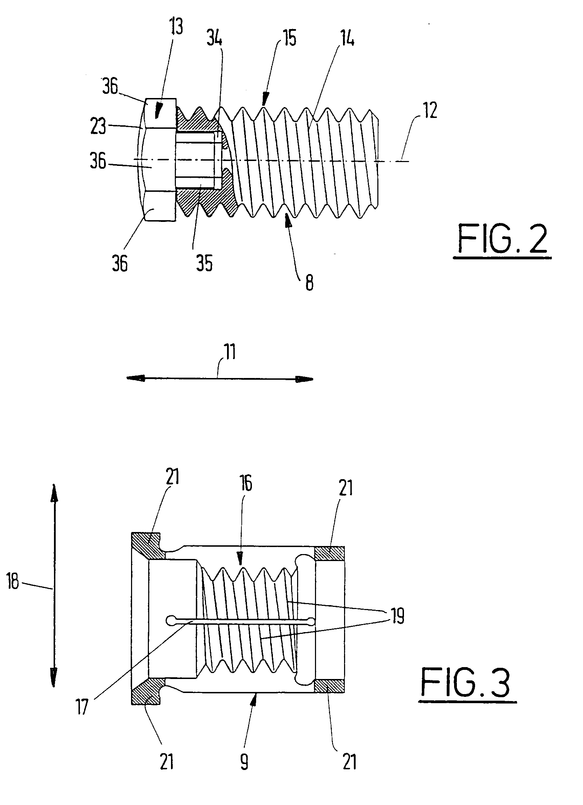

In Fig. 2 ist der in Fig. 1 links angeordnete, in Querrichtung 11 radial zur Mittellängsachse 5 des Schafts 4 verlaufende Führungskörper 8 dargestellt. Die Führungskörperlängsachse 12 verläuft im Montageendzustand also in Querrichtung 11. Der Führungskörper 8 besteht einerseits aus dem Führungskopf 13 und dem Gewindebolzen 14. Der Führungskopf 13 ist aus Hartmetall gefertigt. Der Gewindebolzen 14 ist aus Stahl und trägt an seiner Außenseite das Spitzgewinde 15. Der Gewindeträger 9 weist ein zum Spitzgewinde 15 am Gewindebolzen 14 komplementär ausgebildetes Innengewinde 16 auf. Das Innengewinde 16 ist durch den in Montageendstellung in Querrichtung 11 radial zur Mittellängsachse 5 des Schafts 4 verlaufenden Längsschlitz 17 geschlitzt. Dem Längsschlitz 17 liegt auf der in Fig. 3 nicht sichtbaren Seite des Gewindeträgers 9 ein entsprechender Längsschlitz 17 gegenüber. Durch die Anbringung der beiden gegenüberliegenden Längsschlitze 17 ist das Innengewinde 16 in zwei in Aufspreizrichtung 18 auseinanderfederbare und aufspreizbare Gewindeschenkel 19 zweigeteilt.

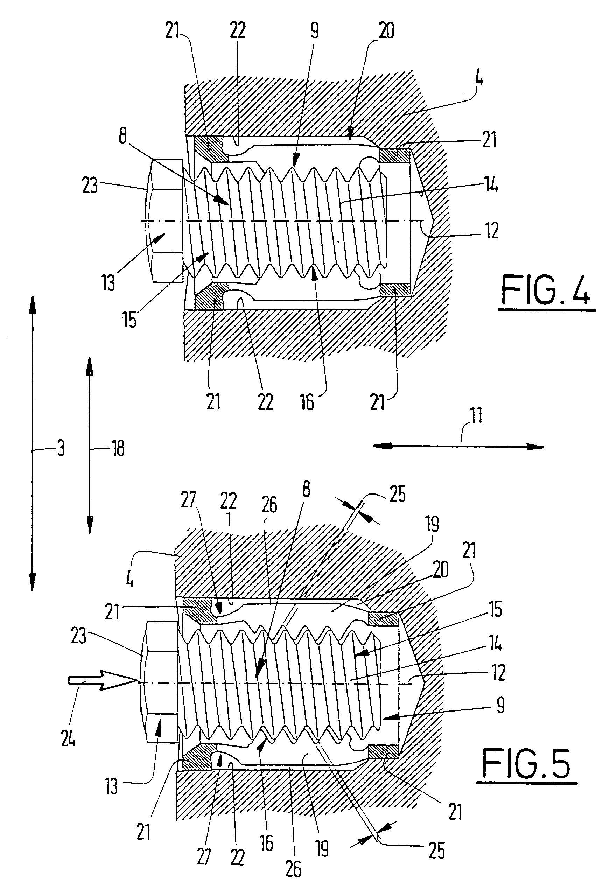

Im Montageendzustand liegt der Gewindeträger 9 in der Aufnahmebohrung 20 im Schaft 4 ein. Die Aufnahmebohrung 20 verläuft in Querrichtung 11. Der Gewindeträger 9 liegt im Montageendzustand mit seinen Anlageflächen 21 an den Bohrungsinnenwänden 22 der Aufnahmebohrung 20 an. Im Montageendzustand verlaufen sowohl der in Fig. 4 und Fig. 5 nicht dargestellte Längsschlitz 17 am Gewindeträgers 9 in seine Sollage eingeschraubt. Liegt das Bohrwerkzeug 1 in der zu bearbeitenden Bohrung ein, gleitet der am Gewindebolzen 14 befestigte Führungskopf 13 mit seiner Führungsfläche 23 an der Innenwand der zu bearbeitenden Bohrung entlang und stützt so das Bohrwerkzeug 1 an der in den Zeichnungen nicht dargestellten Bohrungsinnenwand ab und führt es. Gleitet die Führungsfläche 23 hierbei über eine Ungenauigkeit der nicht dargestellten Bohrungsinnenwand, wird auf den Führungskörper 8 eine Radialkraft 24 ausgeübt. Infolge der auf den Führungskopf 13 über die Führungsfläche 23 wirkenden Radialkraft 24 wird der Führungskörper 8 aus seiner in Fig. 4 dargestellten Ausgangsstellung bzw. Nullstellung in seine in Fig. 5 dargestellte Einfederstellung gebracht. Hierfür spreizen die Gewindeschenkel 19 des Gewindeträgers 9 in Aufspreizrichtung 18 auseinander, so daß der Führungskörper 8 um den Betrag des Einfederwegs 25 in Querrichtung 11 weiter in die Aufnahmebohrung 20 hineingleiten kann. Die Richtung der Radialkraft 24 entspricht hierbei der Einschraubrichtung des Gewindebolzens 14. Der Einfederweg 25 ist in Fig. 5 gut sichtbar. Infolge des Auseinanderfederns der Gewindeschenkel 19 verfahren die Flanken des Spitzgewindes 15 und des Innengewindes 16 aufeinander, so daß die dem Führungskopf 13 zugewandten Gewindeflanken des Spitzgewindes 15 von den zugeordneten Gewindeflanken des Innengewindes 16 abheben. Wird die Einleitung der Radialkraft 24 vermindert oder beendet, federt der Führungskörper 8 wiederum in Querrichtung 11 gegen die in Richtung der Radialkraft 24 verlaufende Einschraubrichtung zurück.

Bei montiertem Gewindeträger 9 entsteht zwischen der Bohrungsinnenwand 22 und der Gewindeträgeraußenwand 26 der Hohlraum 27. Der Hohlraum 27 kann bei Bedarf mit einer Füllung aus schwingungsdämpfendem Material ganz oder teilweise ausgefüllt sein.

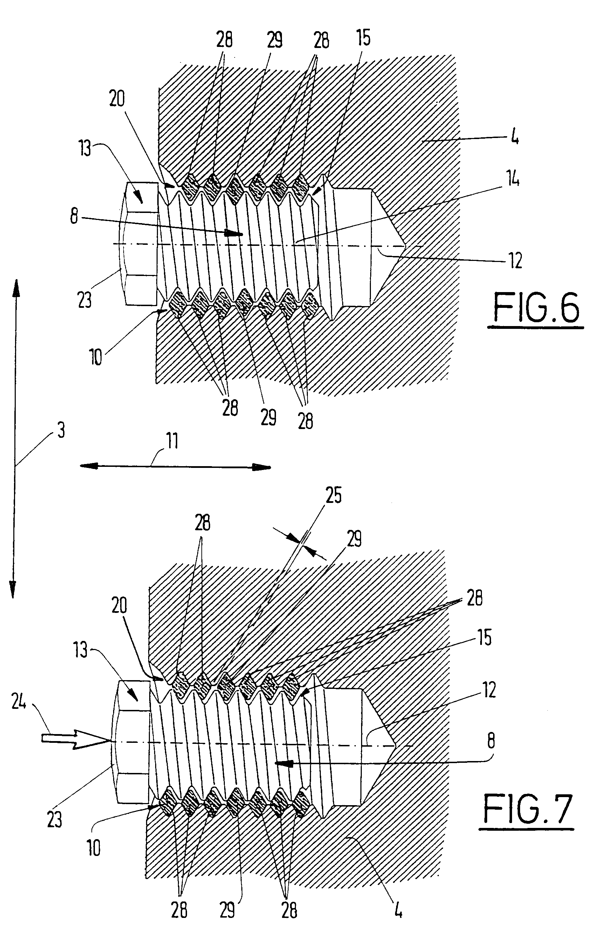

Anstelle des Gewindeträgers 9 kann auch ein Drahteinsatz 10 vorgesehen sein (Fig. 6). Der Drahteinsatz 10 besteht aus mehreren Drahtwendeln 28 und hat die Grundkontur einer Spiralfeder. Die Drahtwendeln 28 sind grundsätzlich rund und bilden die Gewindegänge für das Spitzgewinde 15 des Gewindebolzens 14 am Führungskörper 8. In Fig. 6 ist weiterhin gut erkennbar, daß die Innenwand der Aufnahmebohrung 20 wendelförmig profiliert ist zur Fixierung des Drahteinsatzes 10. Die dem Spitzgewinde 15 des Gewindebolzens 14 im Montageendzustand abgewandten Flanken der Drahtwendel 28 greifen hierzu in die Profilierung in der Wand der Aufnahmebohrung 20 ein.

Flanken der Drahtwendel 28 greifen hierzu in die Profilierung in der Wand der Aufnahmebohrung 20 ein.

Auch im Ausführungsbeispiel gemäß Fig. 7 gleitet der Führungskopf 13 mit seiner Führungsfläche 23 an der in den Zeichnungen nicht dargestellten Bohrungsinnenwand des vom Bohrwerkzeug 1 zu spanenden Bohrlochs entlang. Durch eine Erhebung auf der Innenwand des zu spanenden Bohrlochs wird wiederum eine Radialkraft 24 in Einschraubrichtung des Gewindebolzens 14 auf den Führungskörper 8 ausgeübt, wodurch der Führungskörper 8 um den Einfederweg 25 in Richtung der Radialkraft 24, also in Querrichtung 11 in die Aufnahmebohrung 20, hineingleitet.

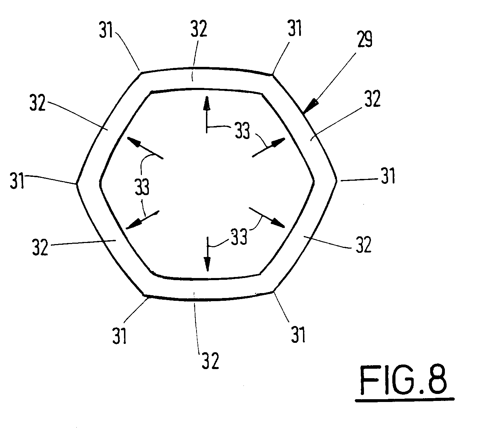

Eine Drahtwendel 28 im Ausführungsbeispiel der Fig. 6 und Fig. 7 ist als Polygon 29 ausgestaltet (Fig. 8). Dieser polygonförmige Wendelgang weist mehrere Polygonkanten 31 auf. Die zwischen den Polygonkanten 31 angeordneten Flächen bilden als Blattfedern wirksame Federbereiche 32. Infolge der Krafteinleitung durch die Radialkraft 24 wird der Führungskörper 8 um den Einfederweg 25 in die Aufnahmebohrung 20 hineinverfahren. Infolge dieser Krafteinleitung federn die Federbereiche 32 exzentrisch in Richtung der Pfeile 33 nach außen. Durch die Verformung des Polygons 29 wird die Radialkraft 24 von den Federbereichen 32 des Polygons 29 nach Art von Blattfedern aufgenommen. Die Federrichtung gemäß Pfeil 33 verläuft hier zentrifugal zur Führungskörperlängsachse 12. Die Federbereiche 32 bewegen sich also federartig radial von der Führungskörperlängsachse 12 weg. Wird die Krafteinleitung mit der Radialkraft 24 beendet, federt der Drahteinsatz 10 den Führungskörper 8 wiederum in seine in Fig. 6 dargestellte Ausgangslage zurück. Die Federbewegung des Polygons 29 entspricht funktionsmäßig dem Auseinanderfedern der Gewindeschenkel 19 bei der zuerst beschriebenen Ausführungsform mit Gewindeträger 9.

Aus der Fig. 2 ist schließlich sehr gut erkennbar, daß in das eine Freiende des Gewindebolzens 14 in einer bevorzugten Ausführungsform ein Innensechskant 34 eingeformt ist. Der Führungskopf 13 ist pilzförmig ausgestaltet. Der unterhalb des Pilzhuts angeordnete Pilzstengel des Pilzes bildet in der bevorzugten Ausführungsform einen dem Innensechskant 34 entsprechenden Außensechskant 35. Der Außensechskant 35 ist gleichzeitig als Montageschaft für den Führungskopf 13 wirksam. Der Führungskopf 13 ist mit dem Außensechskant 35 einfach in den Innensechskant 34 hineingesteckt. Außensechskant 35 und Innensechskant 34 sind hierbei paßgenau zueinander verarbeitet. Zur dauerhaften Fixierung des Führungskörperlängsachse 12 verlaufenden Montageflächen 36. Die Montageflächen 36 bilden nach der Erfindung einen weiteren gegenüber dem Außensechskant 35 größeren Außensechskant. Dieser größere aus den Montageflächen 36 bestehende Außensechskant ist als Montagesechskant wirksam. Auf den Montagesechskant ist einfach ein Ringschlüssel oder Gabelschlüssel aufsetzbar. Der aus Führungskopf 13 und Gewindebolzen 14 bestehende Führungskörper 8 ist mit Hilfe des vorerwähnten auf den Montagesechskant aufgesetzten Schraubenschlüssels einfach in das Innengewinde 16 des Gewindeträgers 9 oder die Drahtwendel 28 des Drahteinsatzes 10 einschraubbar. Über den als Hutmutter ausgebildeten Führungskopf 13 ist der Führungskörper 8 also sowohl montierbar und demontierbar als auch ein- und nachstellbar. Der Führungskopf 13 hat also die Zweitfunktion eines Montagekopfs.

### Bezugszeichenliste

- 1: Bohrwerkzeug
- 2: Werkzeugaufnahme
- 3: Längsrichtung
- 4: Schaft
- 5: Mittellängsachse
- 6: Wendeschneidplatte
- 7: Führungselement
- 8: Führungskörper
- 9: Gewindeträger
- 10: Drahteinsatz
- 11: Querrichtung
- 12: Führungskörperlängsachse
- 13: Führungskopf
- 14: Gewindebolzen
- 15: Spitzgewinde
- 16: Innengewinde
- 17: Längsschlitz
- 18: Aufspreizrichtung
- 19: Gewindeschenkel
- 20: Aufnahmebohrung
- 21: Anlagefläche
- 22: Bohrungsinnenwand
- 23: Führungsfläche
- 24: Radialkraft
- 25: Einfederweg
- 26: Gewindeträgeraußenwand
- 27: Hohlraum
- 28: Drahtwendel
- 29: Polygon
- 31: Polygonkante
- 32: Federbereich
- 33: Pfeil
- 34: Innensechskant
- 35: Außensechskant
- 36: Montagefläche

## Patentansprüche

1. Führungselement für ein Zerspanungswerkzeug
- mit einer Aufnahmebohrung (20) im Werkzeugschaft (4),
- mit einem mit seinem Außengewinde in die Aufnahmebohrung (20) eingeschraubten Gewindebolzen (14) und
- mit einem auf dem Freiende des Gewindebolzens (14) fixierten, nach Art einer Führungsleiste wirksamen Führungskopf (13),
dadurch gekennzeichnet,
- daß das Innengewinde in der Aufnahmebohrung (20) als federlagerartiger Gewindeträger (9) bzw. Einsatz (10) ausgebildet ist und
- daß der Gewindebolzen (14) im eingeschraubten Zustand mit seinem Außengewinde in Einschraubrichtung im Gewindeträger (9) bzw. Einsatz (10) federnd gelagert ist.

2. Führungselement nach Anspruch 1,
gekennzeichnet durch
einen längsgeschlitzten, in die Aufnahmebohrung (20) einsetzbaren und durch den Gewindebolzen (14) aufspreizbaren Gewindeträger (9) mit vorzugsweise einem Spitzgewinde (15) als Innengewinde (16).

3. Führungselement nach Anspruch 2,
gekennzeichnet durch
zwei einander gegenüberliegende, in Einschraubrichtung des Gewindebolzens (14) verlaufende Längsschlitze (17) im Gewindeträger (9) zur Bildung zweier gegeneinander federnd aufspreizbarer Gewindeschenkel (19) am Gewindeträger (9).

4. Führungselement nach Anspruch 3,
gekennzeichnet durch
eine Vielzahl in Einschraubrichtung des Gewindebolzens (14) verlaufender Längsschlitze (17) im Gewindeträger (9) zur Bildung mehrerer gegeneinander federnd aufspreizbarer Gewindeschenkel (19) am Gewindeträger (9).

5. Führungselement nach einem oder mehreren der vorhergehenden Ansprüche,
dadurch gekennzeichnet,
daß bei eingeschraubtem Gewindebolzen (14) die Gewindeschenkel (19) zur Bildung einer Vorspannung am Gewindeträger (9) um ein geringes Maß auseinandergespreizt sind zur Bildung einer Reibkraft zur Selbsthemmung des Gewindebolzens (14).

6. Führungselement nach Anspruch 5,
dadurch gekennzeichnet,
daß die vorgespannten Gewindeschenkel (19) bei Krafteinleitung in den Gewindebolzen (14) in Einschraubrichtung weiter aufspreizbar sind zur elastischen Verformung des Gewindeträgers (9) und zur Längsverfahrbarkeit des Gewindebolzens (14) in Einschubrichtung.

7. Führungselement nach einem oder mehreren der vorhergehenden Ansprüche,
dadurch gekennzeichnet,
daß zwischen der Innenwand (22) der Aufnahmebohrung (20) und der Außenwand (26) des Gewindeträgers (9) ein bei eingesetztem Gewindeträger (9) entstehender Hohlraum (27) mit schwingungsdämpfendem Material ausgefüllt ist.

8. Führungselement nach Anspruch 1,
gekennzeichnet durch
einen in die Aufnahmebohrung (20) einsetzbaren, wendelförmigen Drahteinsatz (10), dessen Wendelgänge (28) die Innengewindegänge bilden.

9. Führungselement nach Anspruch 8,
dadurch gekennzeichnet,
daß die Wendelgänge (28) in Einschraubrichtung des Gewindebolzens (14) gegeneinander federelastisch verschiebbar sind.

10. Führungselement nach Anspruch 8 oder Anspruch 9,
dadurch gekennzeichnet,
daß mindestens ein Wendelgang (28) polygonförmig ist zur Bildung mehrerer, jeweils zwischen zwei benachbarten Polygonkanten (31) angeordneter, als radiale Blattfedern wirksamer Federbereiche (32).

11. Führungselement nach einem der Ansprüche 8 bis 10,
gekennzeichnet durch
ein wendelförmiges Innenprofil der Innenwand (22) der Aufnahmebohrung (20) zur formschlüssigen Fixierung des Drahteinsatzes (10).

12. Führungselement insbesondere nach Anspruch 1,
gekennzeichnet
- durch eine in ein Freiende des Gewindebolzens (14) eingeformte Bohrung - vorzugsweise einen Innensechskant (34) - und
- durch eine entsprechende Außenkontur des Montageschafts am Führungskopf (13) - vorzugsweise einen Außensechskant (35) - zur Fixierung des Führungskopfs (13) am Gewindebolzen (14).

13. Führungselement nach Anspruch 12,
dadurch gekennzeichnet,
- daß der Führungskopf (13) aus einem Hartstoff, vorzugsweise aus Hartmetell, besteht und
- daß der Führungskopf (13) komplementär zu einem Montagewerkzeug ausgebildet ist.

14. Führungselement nach Anspruch 13,
dadurch gekennzeichnet
daß der Führungskopf (13) als sechskantförmiger Hutmutterkopf ausgebildet ist,
- mit einem Außensechskant (36) als Ansatzfläche für einen handelsüblichen Schraubenschlüssel und
- mit einer vorzugsweise konvex gewölbten Führungsfläche (23).

15. Bohrwerkzeug (1) oder Senkwerkzeug oder Reibwerkzeug mit einem Führungselement nach einem oder mehreren der vorhergehenden Ansprüche.

## Claims

1. Guide element for a cutting tool
- having a receiving bore (20) in the tool shank (4),
- having a threaded bolt (14), which is screwed into the receiving bore (20) by way of its external thread, and
- having a guide head (13), which is fixed at the free end of the threaded bolt (14) and acts in the manner of a guide moulding,
characterized
- in that the internal thread in the receiving bore (20) is designed as a spring-bearing-like thread carrier (9) or insert (10), and
- in that in the screwed-in state the threaded bolt (14), by way of its external thread, is mounted resiliently in the thread carrier (9) or insert (10) in the screw-in direction.

2. Guide element according to Claim 1, characterized by a longitudinally slit thread carrier (9) which can be inserted into the receiving bore (20), can be spread apart by the threaded bolt (14) and has preferably a V-thread (15) as internal thread (16).

3. Guide element according to Claim 2, characterized by two mutually opposite longitudinal slits (17), running in the screw-in direction of the threaded bolt (14), in the thread carrier (9) for the purpose of forming two threaded legs (19) on the thread carrier (9), it being possible for said threaded legs to be spread apart resiliently with respect to one another.

4. Guide element according to Claim 3, characterized by a plurality of longitudinal slits (17), running in the screw-direction of the threaded bolt (14), in the thread carrier (9) for the purpose of forming a plurality of threaded legs (19) on the thread carrier (9), it being possible for said threaded legs to be spread apart resiliently with respect to one another.

5. Guide element according to one or more of the preceding claims, characterized in that, with the threaded bolt (14) screwed in, the threaded legs (19), for forming prestressing on the thread carrier (9), are spread apart by a small amount in order to form a frictional force for the self-locking of the threaded bolt (14).

6. Guide element according to Claim 5, characterized in that, with the introduction of force into the threaded bolt (14) in the screw-in direction, the prestressed threaded legs (19) can be spread apart further for the elastic deformation of the thread carrier (9) and the longitudinal displaceability of the threaded bolt (14) in the push-in direction.

7. Guide element according to one or more of the preceding claims, characterized in that, between the inner wall (22) of the receiving bore (20) and the outer wall (26) of the thread carrier (9), a cavity (27), which is produced when the thread carrier (9) is inserted, is filled with vibration-damping material.

8. Guide element according to Claim 1, characterized by a coiled wire insert (10) which can be inserted into the receiving bore (20) and of which the coil turns (28) form the internal-thread turns.

9. Guide element according to Claim 8, characterized in that the coil turns (28) can be displaced in a resiliently elastic manner with respect to one another in the screw-in direction of the threaded bolt (14).

10. Guide element according to Claim 8 or Claim 9, characterized in that at least one coil turn (28) is polygonal, for the purpose of forming a plurality of resilient regions (32) which are arranged in each case between two adjacent polygon edges (31) and act as radial leaf springs.

11. Guide element according to one of Claims 8 to 10, characterized by a coiled inner profile of the inner wall (22) of the receiving bore (20) for the positively locking fixing of the wire insert (10).

12. Guide element in particular according to Claim 1, characterized
- by a bore - preferably a hexagon socket (34) - which is formed in a free end of the threaded bolt (14), and
- by a corresponding outer contour of the installation shank on the guide head (13) - preferably a hexagon stub (35) - for the purpose of fixing the guide head (13) on the threaded bolt (14).

13. Guide element according to Claim 12, characterized
- in that the guide head (13) consists of a hard material, preferably hard metal, and
- in that the guide head (13) is designed to complement an assembly tool.

14. Guide element according to Claim 13, characterized in that the guide head (13) is designed as a hexagonal cap-nut head
- with a hexagon stub (36) as an attachment surface for a commercially available spanner, and
- with a preferably convexly curved guide surface (23).

15. Drilling tool (1) or countersinking tool or reaming tool with a guide element according to one or more of the preceding claims.

## Revendications

1. Élément de guidage pour un outil travaillant par enlèvement de matière, comprenant :
- un perçage de réception (20) dans le fût d'outil (4),
- un boulon fileté (14), vissé par son filetage extérieur dans le perçage de réception (20), et
- une tête de guidage (13), fixée sur l'extrémité libre du boulon fileté (14), et agissant à la manière d'une barrette de guidage,
caractérisé en ce que :
- le taraudage intérieur dans le perçage de réception (20) est réalisé sous forme d'un porte-taraudage (9) ou d'un insert (10) à la manière d'un coussinet à ressort, et
- le boulon fileté (14) est monté de façon élastique dans l'état vissé avec son filetage extérieur dans la direction de vissage dans le porte-taraudage (9), ou insert (10).

2. Élément de guidage selon la revendication 1, caractérisé par
un porte-taraudage (9) fendu dans le sens longitudinal, comportant de préférence un taraudage pointu (15) comme taraudage intérieur (16), susceptible d'être mis en place dans le perçage de réception (20), et capable d'être écarté par le boulon fileté (14).

3. Élément de guidage selon la revendication 2, caractérisé par
deux fentes longitudinales (17) mutuellement opposées et s'étendant dans la direction de vissage du boulon fileté (14) dans le porte-taraudage (9), afin de former deux bras de taraudage (19) sur le porte-taraudage (9), susceptibles de s'écarter élastiquement l'un de l'autre.

4. Élément de guidage selon la revendication 3, caractérisé par
une pluralité de fentes longitudinales (17) s'étendant dans la direction de vissage du boulon fileté (14) dans le porte-taraudage (9) pour former plusieurs bras de taraudage (19) sur le porte-taraudage (9), capables de s'écarter élastiquement les uns par rapport aux autres.

5. Élément de guidage selon l'une ou plusieurs des revendications précédentes, caractérisé en ce que
lorsque le boulon fileté (14) est vissé, les bras de taraudage (19) sont écartés les uns des autres d'une légère mesure afin d'entraîner une précontrainte sur le porte-taraudage (9), dans le but de produire une force de friction pour l'autofreinage du boulon fileté (14).

6. Élément de guidage selon la revendication 5, caractérisé en ce que
les bras de taraudage (19) précontraints sont capables de s'écarter plus loin lors de l'application d'une force dans le boulon fileté (14) dans la direction de vissage, afin de déformer élastiquement le porte-taraudage (9) et d'assurer une capacité de déplacement longitudinal du boulon fileté (14) dans la direction d'introduction.

7. Élément de guidage selon l'une ou plusieurs des revendications précédentes, caractérisé en ce que
une cavité (25) qui apparaît entre la paroi intérieure (22) du perçage de réception (20) et la paroi extérieure (26) du porte-taraudage (9), lorsque le porte-taraudage (9) est mis en place, est remplie d'un matériau amortissant les oscillations.

8. Élément de guidage selon la revendication 1, caractérisé par
un insert en fil (10) de forme spiralée, susceptible d'être mis en place dans le perçage de réception (20), dont les spires (28) forment les pas du taraudage intérieur.

9. Élément de guidage selon la revendication 8, caractérisé en ce que
les spires (28) sont susceptibles de se déplacer de façon élastique les unes par rapport aux autres dans la direction de vissage du boulon fileté (14).

10. Élément de guidage selon l'une ou l'autre des revendications 8 et 9, caractérisé en ce que
une spire au moins (28) est de forme polygonale afin de former plusieurs zones de ressort (32), agencées respectivement entre deux côtés de polygone voisins (31), et faisant office de ressorts à lame radiaux.

11. Élément de guidage selon l'une des revendications 8 à 10, caractérisé par
un profilé intérieur de forme spiralée de la paroi intérieure (22) du perçage de réception (20) afin de fixer l'insert en fil (10) par coopération de formes.

12. Élément de guidage, en particulier selon la revendication 1, caractérisé par
- un perçage en forme ménagé dans l'extrémité libre du boulon fileté (14), de préférence une empreinte creuse à six pans (34), et
- un contour extérieur correspondant de la tige de montage sur la tête de guidage (13), de préférence un relief à six pans (35), pour la fixation de la tête de guidage (13) sur le boulon fileté (14).

13. Élément de guidage selon la revendication 12, caractérisé en ce que
- la tête de guidage (13) est constituée en matériau dur, de préférence en métal dur, et
- la tête de guidage (13) est réalisée de manière complémentaire à un outil de montage.

14. Élément de guidage selon la revendication 13, caractérisé en ce que la tête de guidage (13) est réalisée sous la forme d'une tête en forme d'écrou à capuchon de forme hexagonale,
- avec un relief à six pans (36) comme surface d'attaque pour une clé de vissage usuelle du commerce, et
- avec une surface de guidage (23) de préférence bombée sous forme convexe.

15. Outil de perçage (1), outil de lamage, ou outil à friction comprenant un élément de guidage selon l'une ou plusieurs des revendications précédentes.
